(19) Europäisches Patentamt
European Patent Office
Office européen des brevets

(11) EP 4 715 896 A1

(12) EUROPEAN PATENT APPLICATION
published in accordance with Art. 153(4) EPC

(43) Date of publication:
**25.03.2026 Bulletin 2026/13**

(21) Application number: **23938796.2**

(22) Date of filing: **30.05.2023**

(51) International Patent Classification (IPC):
***H01M 4/36*** *(2006.01)*

(52) Cooperative Patent Classification (CPC):
**H01M 10/0569; H01M 4/366; H01M 4/505; H01M 4/525; H01M 4/62; H01M 10/0525; H01M 10/0567; H01M 10/0568;** H01M 2004/021; H01M 2004/028; H01M 2300/004; Y02E 60/10

(86) International application number:
**PCT/CN2023/097115**

(87) International publication number:
**WO 2024/243801 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology Co., Limited**
**Ningde, Fujian 352100 (CN)**

(72) Inventors:
- **WU, Qiao**
  **Ningde, Fujian 352100 (CN)**
- **HAN, Changlong**
  **Ningde, Fujian 352100 (CN)**
- **WU, Zeli**
  **Ningde, Fujian 352100 (CN)**
- **LIN, Zehui**
  **Ningde, Fujian 352100 (CN)**

(74) Representative: **Gong, Jinping**
**CocreateIP**
**Neumarkter Straße 21**
**81673 München (DE)**

# (54) BATTERY CELL, BATTERY COMPRISING SAME, AND ELECTRIC APPARATUS

(57) The present application provides a battery cell, a battery comprising same, and an electrical apparatus. The battery cell comprises a positive electrode plate and an electrolyte solution. The positive electrode plate comprises a positive electrode active material. The positive electrode active material comprises an inner core and a coating layer coating the inner core. The inner core comprises $Li_x(Ni_aCo_bMn_c)_dM_eO_fA_y$, where x, a, b, c, d., e, f, and y are respectively as described in the specification of the present application, M includes one or more of Zr, Sr, B, Ti, Mg, Sn, Tb, W, Nb, Sb, or Al, and A includes one or more of S, N, F, Cl, Br, or I. The coating layer comprises element Y, and the element Y includes one or more of Co, Zr, Sr, B, Ti, Mg, Sn, Tb, W, Nb, Sb, or Al. The electrolyte solution comprises a first additive, and the first additive includes an organic substance comprising a Si-N bond and a Si-O bond.

5

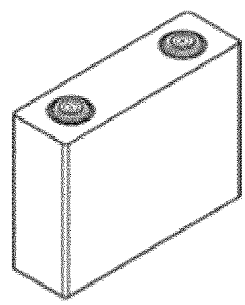

FIG. 1

EP 4 715 896 A1

## Description

## Technical Field

The present application relates to a battery cell, a battery comprising same, and an electrical apparatus.

## Background

In recent years, secondary batteries have been widely applied to energy storage power source systems such as hydraulic, firepower, wind and solar power stations, as well as many fields, e.g., electric tools, electric bicycles, electric motorcycles, electric automobiles, military equipment, and aerospace. With the application and popularization of secondary batteries, the requirements for the energy density and cycling performance thereof are also becoming more and more stringent.

## Summary **of the Invention**

The present application provides a battery cell, a battery comprising same, and an electrical apparatus. The battery cell and the battery comprising the battery cell can have both a high energy density and a good cycling performance.

In a first aspect, an embodiment of the present application provides a battery cell, which comprises a positive electrode plate and an electrolyte solution. The positive electrode plate comprises a positive electrode active material, and the positive electrode active material comprises an inner core and a coating layer coating the inner core.

The inner core comprises $Li_x(Ni_aCo_bMn_c)_dM_eO_fA_y$, where $0.2 \leq x \leq 1.3$, $0.3 \leq a \leq 0.7$, $0.01 \leq b \leq 0.15$, $0.1 \leq c \leq 0.5$, $0.95 \leq d \leq 1$, $0 \leq e \leq 0.05$, $1.8 \leq f \leq 2$, and $0 \leq y \leq 0.1$, M includes one or more of Zr, Sr, B, Ti, Mg, Sn, Tb, W, Nb, Sb, or Al, and A includes one or more of S, N, F, Cl, Br, or I.

The coating layer comprises element Y, and the element Y includes one or more of Co, Zr, Sr, B, Ti, Mg, Sn, Tb, W, Nb, Sb, or Al.

The electrolyte solution comprises a first additive, and the first additive includes an organic substance comprising a Si-N bond and a Si-O bond.

Without intending to be limited by any theory or explanation, the battery cell of the embodiment of the present application comprises the above positive electrode active material. The positive electrode active material comprises an inner core comprising a doped nickel-cobalt-manganese ternary material, and a coating layer coating the inner core. The coating layer comprises a specific element Y. The positive electrode active material can maintain a relatively high structural stability during charge-discharge cycling at a high voltage. Furthermore, the electrolyte solution of the battery cell in the embodiment of the present application further comprises a first additive. The Si-N bond of the first additive is easily bonded to a nucleophilic substance in the electrolyte solution to form a silicon-based derivative, thereby forming a low-impedance interface film on the surface of the positive electrode plate and the negative electrode plate. Therefore, not only can the impedance of the positive electrode plate be reduced, but also the decomposition of $LiPF_6$ can be inhibited, thereby reducing the generation of HF, inhibiting the dissolution of transition metals and improving the cycling performance of the battery at a high voltage. In addition, silicon in the silicon-based derivative can react with fluorine, thus inhibiting the generation of LiF on the surface of the positive electrode plate and improving the ion conductivity of the surface of the positive electrode plate, thereby reducing the attenuation the capacity of the battery and improving the initial DCR of the battery. In addition, a lone electron pair of the oxygen atom in the Si-O bond in the first additive can also capture protons ($H^+$), so that the generation of HF can be further inhibited, thereby improving the cycling performance of the battery at a high voltage.

Therefore, the battery cell of the embodiment of the present application can have both a high energy density and a good cycling performance.

In any embodiment of the present application, the coating layer comprises one or more of elemental substance, oxide, boride, phosphate, oxalate, carbonate, or sulfate of the element Y, or a thermal decomposition product thereof. Therefore, the interface stability of the positive electrode active material at a high voltage can be improved, and the DCR increase during cycling can be reduced, thus further improving the cycling performance of the battery.

In any embodiment of the present application, based on the total mass of the positive electrode active material, the content u of the element Y in ppm satisfies $3000 \leq u \leq 15000$; optionally $5000 \leq u \leq 10000$. Therefore, the coating layer can maintain a better lithium ion transmission performance, which is beneficial to improving the gram capacity of the positive electrode active material, thereby improving the energy density and cycling performance of the battery.

In any embodiment of the present application, the first additive includes one or more of compounds represented by Formulas 1 and 2.

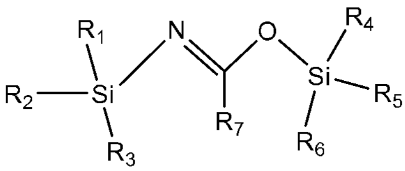 Formula 1 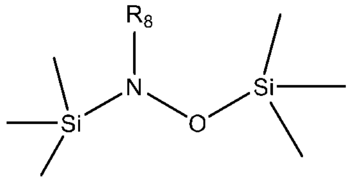 Formula 2

In Formulas 1 and 2, $R_1$, $R_2$, $R_3$, $R_4$, $R_5$, $R_6$, $R_7$, and $R_8$ each independently represent a hydrogen atom or one of the following groups, either substituted or unsubstituted:
C1-C12 alkyl or alkoxy, C2-C12 alkenyl or alkenoxy, C2-C12 alkynyl or alkynoxy, C3-C12 cycloalkyl or epoxyalkyl, C1-C12 cyano or cyanooxy, C1-C12 silanyl. Optionally, substituents include halogen.

Optionally, $R_1$, $R_2$, $R_3$, $R_4$, $R_5$, and $R_6$ each independently represent one of substituted or unsubstituted C1-C5 alkyl or alkoxy, and substituted or unsubstituted C2-C6 alkenyl or alkenoxy, and at least one of $R_1$, $R_2$, $R_3$, $R_4$, $R_5$, and $R_6$ is C1-C3 alkyl or alkoxy; $R_7$ represents substituted or unsubstituted C1-C3 alkyl or alkoxy; and $R_8$ represents one of a hydrogen atom, substituted or unsubstituted C1-C3 alkyl or alkoxy, and substituted or unsubstituted C1-C4 silanyl.

The above compounds represented by Formulas 1 and 2 can react with the nucleophilic substance in the electrolyte solution to form low-impedance interface film on the surfaces of the positive electrode plate and the negative electrode plate. Therefore, not only can the impedance of the positive electrode plate be reduced, but also the decomposition of $LiPF_6$ can be inhibited, thereby reducing the generation of HF, inhibiting the dissolution of transition metals and improving the cycling performance of the battery at a high voltage.

In any embodiment of the present application, the first additive includes one or more of N,O-bis(trimethylsilyl) hydroxylamine, N-methyl-N,O-bis(trimethylsilyl)hydroxylamine, N,N,O-tris(trimethylsilyl)hydroxylamine, N,O-bis(trimethylsilyl)acetamide, N,O-bis(trimethylsilyl)trifluoroacetamide, N,O-bis(diethylhydrosilyl)trifluoroacetamide, N,O-bis(ethyldimethylsilyl)trifluoroacetamide, N,O-bis(propyldimethylsilyl)trifluoroacetamide, N,O-bis(tert-butyldimethylsilyl) trifluoroacetamide, or N,O-bis(propenyldimethylsilyl)trifluoroacetamide.

Optionally, the first additive includes one or more of N,O-bis(trimethylsilyl)hydroxylamine, N,O-bis(trimethylsilyl) acetamide or N,O-bis(trimethylsilyl)trifluoroacetamide.

When the first additive is selected from the above varieties of substances, the initial DCR of the battery can be further reduced and the cycling performance of the battery can be improved.

In any embodiment of the present application, based on the total mass of the electrolyte solution, the mass percentage content v% of the first additive satisfies $0.1 \leq v \leq 3$; optionally $0.3 \leq v \leq 1$. Therefore, it is beneficial to optimizing the initial DCR and inhibiting the increase of DCR during the cycling of the battery.

In any embodiment of the present application, the battery cell satisfies $0.1 \leq (u/v)\times 10^{-4} \leq 15$, optionally $0.5 \leq (u/v)\times 10^{-4} \leq 3$, where u in ppm represents the content of the element Y based on the total mass of the positive electrode active material; and v% represents the mass percentage content of the first additive based on the total mass of the electrolyte solution.

When the content of the element Y and the mass percentage content of the first additive in the electrolyte solution satisfy the given relationships, not only can the positive electrode active material have a high structural stability, but also the positive electrode plate can have a low impedance and a good ion conductivity. Therefore, the battery cell can maintain a relatively low initial DCR and a good cycling performance at a high voltage.

In any embodiment of the present application, the electrolyte solution further comprises a second additive, and the second additive includes one or more isocyanate compounds.

Optionally, the second additive includes one or more of p-methylphenyl isocyanate, p-toluenesulfonyl isocyanate, trimethylsilyl isocyanate, hexamethylene diisocyanate, or isophorone diisocyanate.

The isocyanate compound can react with water and HF in the electrolyte solution, which can thus not only significantly reduce the acidity of the electrolyte solution and the water in the electrolyte solution, leading to reduced damage to the surface of the electrode plate by HF and water, but can also improve the thermal stability of ions such as $PF_6^-$, so that the battery can still maintain a relatively high discharge capacity after being stored at a high temperature for a period of time. Therefore, the battery cell of the embodiment of the present application can have a relatively low gas production during storage, a good high-temperature cycling performance, and a good high-temperature storage performance. In addition, the isocyanate compound can also participate in the formation of the interface film on the surface of the electrode plate. Due to the special properties of the long carbon chain, the interface film formed by the isocyanate compound has a certain elasticity, so that the negative electrode interface can be better protected, thus contributing to the improvement of the long-term cycling performance of the battery at a high voltage and making the battery have a long cycling life.

In any embodiment of the present application, based on the total mass of the electrolyte solution, the mass percentage content w% of the second additive satisfies $0.1 \leq w \leq 2$; optionally $0.1 \leq w \leq 1$. When the mass percentage content of the second additive in the electrolyte solution satisfies the given range, the capacity attenuation of the battery

during long-term storage at a high temperature can be inhibited.

In any embodiment of the present application, the battery cell satisfies $0.2 \leq v/w \leq 30$, optionally $0.3 \leq v/w \leq 10$, where v% represents the mass percentage content of the first additive based on the total mass of the electrolyte solution; and w% represents the mass percentage content of the second additive based on the total mass of the electrolyte solution. When the mass percentage contents of the first additive and the second additive in the electrolyte solution satisfy the given relationships, the high-temperature storage performance and high-temperature cycling performance of the battery can be further improved.

In any embodiment of the present application, the volume distribution particle size Dv50 of the positive electrode active material is 2 μm-7 μm.

In any embodiment of the present application, the volume distribution particle size Dv10 of the positive electrode active material is 1 μm-3 μm.

In any embodiment of the present application, the volume distribution particle size Dv90 of the positive electrode active material is 5 μm-15 μm.

When the volume distribution particle size of the positive electrode active material satisfies the given range, the volume distribution particle size helps the positive electrode active material to have both a high capacity and a suitable lithium ion transmission path, thereby improving the energy density of the battery and prolonging the cycling life of the battery.

In any embodiment of the present application, the specific surface area of the positive electrode active material is 0.45 $m^2/g$ to 0.99 $m^2/g$.

In any embodiment of the present application, the 4T powder compacted density of the positive electrode active material is 2.5 $g/cm^3$ to 4.5 $g/cm^3$.

When the specific surface area and/or powder compacted density of the positive electrode active material satisfy the given ranges, the specific surface area and/or powder compacted density help to improve the gram capacity of the positive electrode active material and the electrolyte solution infiltration performance on the positive electrode plate, thereby facilitating the improvement of the energy density and rate performance of the battery.

In a second aspect, an embodiment of the present application provides a battery, which comprises the battery cell according to the first aspect of the present application. Therefore, the battery of the embodiment of the present application can have both a high energy density and a good cycling performance.

In a third aspect, an embodiment of the present application provides an electrical apparatus, which comprises the battery cell according to the first aspect or the battery according to the second aspect.

The electrical apparatus of the present application comprises the battery cell or battery provided by the present application and thus has at least the same advantages as the battery cell.

## Description of Drawings

To more clearly illustrate the technical solutions of embodiments of the present application, the following provides a brief description of the accompanying drawings used in the embodiments of the present application. Apparently, the drawings described below are merely some embodiments of the present application. For those of ordinary skill in the art, other drawings may be further obtained based on these drawings without any creative effort.

FIG. 1 is a schematic diagram of an embodiment of a battery cell provided by the present application.
FIG. 2 is a schematic exploded view of an embodiment of a battery cell provided by the present application.
FIG. 3 is a schematic view of an embodiment of a battery module provided by the present application.
FIG. 4 is a schematic view of an embodiment of a battery pack provided by the present application.
FIG. 5 is a schematic exploded view of the embodiment of the battery pack as shown in FIG. 4.

FIG. 6 is a schematic view of an embodiment of an electrical apparatus comprising the battery cell provided by the present application as a power source.

In the accompanying drawings, the accompanying drawings are not necessarily drawn to actual scale. The reference numerals are explained as follows: 1. battery pack; 2. upper box; 3. lower box; 4. battery module; 5. battery cell; 51. case; 52. electrode assembly; and 53. cover plate.

## Detailed Description

Embodiments of the battery cell, the battery comprising same, and the electrical apparatus of the present application are specifically disclosed below with appropriate reference to the detailed description of the accompanying drawings. However, there may be cases where unnecessary detailed descriptions are omitted. For example, there are cases where detailed descriptions of well-known items and repeated descriptions of actually identical structures are

omitted. This is to avoid unnecessary redundancy in the following descriptions and to facilitate understanding by those skilled in the art. In addition, the drawings and subsequent descriptions are provided for those skilled in the art to fully understand the present application, and are not intended to limit the subject matter recited in the claims.

The "ranges" disclosed in the present application are defined in the form of lower and upper limits. A given range is defined by selecting a lower limit and an upper limit, and the selected lower and upper limits define the boundaries of the particular range. The range defined in this way may include or may not include end values, and may be arbitrarily combined, that is, any lower limit can be combined with any upper limit to form a range. For example, if the ranges 60-120 and 80-110 are listed for specific parameters, it is understood that the ranges 60-110 and 80-120 are also expected. In addition, if the listed minimum range values are 1 and 2 and if the listed maximum range values are 3, 4, and 5, the following ranges can all be expected: 1-3, 1-4, 1-5, 2-3, 2-4, and 2-5. In the present application, unless otherwise specified, the numerical value range "a-b" represents an abbreviated representation of any combination of real numbers between a and b, where a and b are both real numbers. For example, the numerical value range "0-5" indicates that all real numbers between "0-5" have been listed herein, and "0-5" is only a shortened representation of these numerical value combinations. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specifically specified, all embodiments and optional embodiments of the present application may be combined with each other to form new technical solutions, and such technical solutions should be considered as being included in the disclosure of the present application.

Unless otherwise specifically specified, all technical features and optional technical features of the present application may be combined with each other to form new technical solutions, and such technical solutions should be considered as being included in the disclosure of the present application.

Unless otherwise specifically specified, all steps in the present application may be performed sequentially or randomly, and are preferably performed sequentially. For example, the method includes steps (a) and (b), indicating that the method may include steps (a) and (b) performed sequentially, or may include steps (b) and (a) performed sequentially. For example, the reference to the method may further comprise step (c), meaning that step (c) may be added to the method in any order, for example, the method may comprise steps (a), (b) and (c), or may comprise steps (a), (c) and (b), or may comprise steps (c), (a) and (b), and so on.

Unless otherwise specifically specified, the "including" and "comprising" mentioned in the present application mean open-ended, or may be closed-ended. For example, the terms "including" and "comprising" may indicate that other components not listed may be further included or comprised, or only the listed components may be included or comprised.

Unless otherwise specifically specified, in the present application, the term "or" is inclusive. For example, the phrase "A or B" means "A, B, or both A and B." More specifically, any one of the following conditions satisfies the condition "A or B": A is true (or present) and B is false (or absent); A is false (or absent) and B is true (or present); or both A and B are true (or present).

Unless otherwise particularly specified, in the present application, the terms "first", "second", etc., are used to distinguish different objects, rather than describing a particular sequence or primary-secondary relationship.

In the present application, the terms "a plurality of", "multiple", etc., refer to two or more.

Unless otherwise specified, the terms used in the present application have the well-known meanings as commonly understood by those skilled in the art.

Unless otherwise specified, numerical values of parameters mentioned in the present application may be measured using various testing methods commonly used in the art. For example, the numerical values may be measured according to testing methods given in the embodiments of the present application. Unless otherwise specified, the test temperature of each parameter is 25°C.

The term "coating layer" herein refers to a material layer that coats the inner core. The material layer may completely or partially coat the inner core, and the "coating layer" is only used for the convenience of description and not intended to limit the present invention. In addition, each coating layer may either completely or partially coat the inner core.

Herein, the term "source" refers to a compound that is the source of an element. As an example, the type of "source" includes but is not limited to a carbonate, a sulfate, a nitrate, an elemental substance, a halide, an oxide, a hydroxide, etc.

Herein, the terms "a plurality of" and "multiple" refer to two or more.

Herein, the term "alkyl" refers to saturated hydrocarbon group, including both linear structures and branched structures. Examples of alkyl include, but are not limited to, methyl, ethyl, propyl (such as n-propyl and isopropyl), butyl (such as n-butyl, isobutyl, sec-butyl, and tert-butyl), and pentyl (such as n-pentyl, isopentyl, and neopentyl). In various embodiments, C1-C6 alkyl, i.e., an alkyl, may contain 1-6 carbon atoms.

Herein, the term "haloalkyl" refers to a group obtained by replacing at least one hydrogen atom in the alkyl by a halogen atom. The number of halogen atoms in the haloalkyl may be one or more. When there are more than one halogen atoms in the haloalkyl, these halogen atoms may be either the same or different.

Herein, the term "alkoxy" refers to alkyl containing an oxygen atom (-O-). Examples of alkoxy include, but are not

limited to, methoxy, ethoxy, and propoxy. In various embodiments, C1-C6 alkoxy, i.e., alkoxy, may contain 1-6 carbon atoms.

Herein, the term "haloalkoxy" refers to a group obtained by replacing at least one hydrogen atom in the alkoxy by a halogen atom. The number of halogen atoms in the haloalkoxy may be either one or more. When there are a plurality of halogen atoms in the haloalkoxy, the plurality of halogen atoms may be either the same or different.

Herein, the halogen atom refers to a fluorine atom, a chlorine atom, a bromine atom, and iodine atom. Optionally, the halogen atom is a fluorine atom.

Throughout this specification, substituents in compounds are disclosed in groups or ranges. It is expressly intended that this description includes each individual sub-combination of members of these groups and ranges. For example, it is expressly intended that the term "C1-C6 alkyl" individually discloses C1, C2, C3, C4, C5, C6, C1-C6, C1-C5, C1-C4, C1-C3, C1-C2, C2-C6, C2-C5, C2-C4, C2-C3, C3-C6, C3-C5, C3-C4, C4-C6, C4-C5, and C5-C6 alkyl groups.

Herein, the term "substituted" means that at least one hydrogen atom of the compound or chemical moiety is replaced by a substituent. The substituents therein may include, but are not limited to, hydroxyl, sulfhydryl, amino, cyano, nitro, aldehyde group, halogen atoms, alkenyl, alkynyl, aryl, heteroaryl, C1-C6 alkyl, and C1-C6 alkoxy.

## Battery cell

Generally, the battery cell comprises an electrode assembly and an electrolyte solution. The electrode assembly comprises a positive electrode, a negative electrode, and a separator. During charging and discharging of the battery cell, active ions (such as lithium ions) are intercalated and deintercalated back and forth between the positive electrode and the negative electrode. The separator is arranged between the positive electrode and the negative electrode, and mainly functions to prevent a short circuit between the positive electrode and the negative electrode while enabling the active ions to pass through. The electrolyte solution serves to conduct active ions between the positive electrode plate and the negative electrode plate.

In the battery cell provided by the embodiment of the present application, the positive electrode plate thereof comprises a positive electrode active material, and the positive electrode active material comprises an inner core and a coating layer coating the inner core. The inner core comprises $Li_x(Ni_aCo_bMn_c)_dM_eO_fA_y$, where $0.2 \leq x \leq 1.3$, $0.3 \leq a \leq 0.7$, $0.01 \leq b \leq 0.15$, $0.1 \leq c \leq 0.5$, $0.95 \leq d \leq 1$, $0 \leq e \leq 0.05$, $1.8 \leq f \leq 2$, and $0 \leq y \leq 0.1$, M includes one or more of Zr, Sr, B, Ti, Mg, Sn, Tb, W, Nb, Sb, or Al, and A includes one or more of S, N, F, Cl, Br, or I. The coating layer comprises element Y, and the element Y includes one or more of Co, Zr, Sr, B, Ti, Mg, Sn, Tb, W, Nb, Sb, or Al. The electrolyte solution of the battery cell comprises a first additive, and the first additive comprises an organic substance comprising a Si-N bond and a Si-O bond.

Increasing the charging cut-off voltage of the battery is considered to be an effective method for improving the energy density of the battery. At present, the positive electrode materials of commercial high-capacity lithium-ion batteries mainly include nickel-cobalt-manganese ternary materials. However, charge-discharge cycling at a high voltage may aggravate the cation mixing phenomenon in a nickel-cobalt-manganese ternary material, so that the nickel-cobalt-manganese ternary material produces irreversible phase transition and aggravates the crystal structure change during charging and discharging, thus leading to the aggravated capacity attenuation and shortened cycling life of the battery. Coating the nickel-cobalt-manganese ternary material can reduce the contact surface between the electrolyte solution and the nickel-cobalt-manganese ternary material and improve the interface stability of the nickel-cobalt-manganese ternary material, thus reducing metal dissolution and inhibiting interfacial side reactions during storage. However, the coating layer may increase the intrinsic internal resistance of the nickel-cobalt-manganese ternary material. In addition, the coating layer usually has a relatively poor lithium ion conductivity, which affects the intercalation and deintercalation of lithium ions in the nickel-cobalt-manganese ternary material to some extent, thus reducing the capacity of the nickel-cobalt-manganese ternary material and deteriorating the initial directive current resistance (DCR) of the battery.

Without intending to be limited by any theory or explanation, the battery cell of the embodiment of the present application comprises the above positive electrode active material. The positive electrode active material comprises an inner core comprising a doped nickel-cobalt-manganese ternary material, and a coating layer coating the inner core. The coating layer comprises a specific element Y. The positive electrode active material can maintain a relatively high structural stability during charge-discharge cycling at a high voltage. Furthermore, the electrolyte solution of the battery cell in the embodiment of the present application further comprises a first additive. The Si-N bond of the first additive is easily bonded to a nucleophilic substance in the electrolyte solution to form a silicon-based derivative, thereby forming a low-impedance interface film on the surface of the positive electrode plate and the negative electrode plate. Therefore, not only can the impedance of the positive electrode plate be reduced, but also the decomposition of $LiPF_6$ can be inhibited, thereby reducing the generation of HF, inhibiting the dissolution of transition metals and improving the cycling performance of the battery at a high voltage. In addition, silicon in the silicon-based derivative can react with fluorine, thus inhibiting the generation of LiF on the surface of the positive electrode plate and improving the ion conductivity of the surface of the positive electrode plate, thereby reducing the attenuation the capacity of the battery and improving the initial DCR of the battery. In addition, a lone electron pair of the oxygen atom in the Si-O bond in the first additive can also capture protons

($H^+$), so that the generation of HF can be further inhibited, thereby improving the cycling performance of the battery at a high voltage.

Therefore, the battery cell of the embodiment of the present application can have both a high energy density and a good cycling performance.

The charging and discharging process of the battery is accompanied by deintercalation and consumption of active lithium ions, and the molar content of lithium in the positive electrode active material varies as the state to which the battery is discharged varies. It can be understood by those skilled in the art that in a battery or an electrical apparatus, some elements of the inner core may be consumed due to the processes of formation, circulation, etc. For example, lithium ions may be consumed due to the processes of formation, cycling, etc., of the battery, so the measured content x of the element lithium in the inner core may be less than 1. In addition, if the positive electrode plate and the negative electrode plate are both supplemented with lithium, the measured content x of the element lithium in the inner core may be greater than 1 after the processes of formation, cycling, etc., of the battery. In addition, as the battery undergoes the processes of cycling, etc., the element oxygen in the inner core may be lost, so the measured content f of the element oxygen in the inner core may be less than 2. The above definition of the content of each element in the inner core includes the molar content of each element when the battery is in different charging and discharging states (usually the voltage of the battery is between 2 V and 5 V).

In an embodiment of the present application, the chemical composition of the inner core can be measured by inductively coupled plasma emission spectrometry (ICP). For example, the measured substance is heated to 500°C and calcined for 2 h, and then cooled to room temperature. The calcined product is dissolved by adding aqua regia, and elemental analysis can then be carried out by inductively coupled plasma emission spectrometry (ICP, Ametek, model: SPECTROARCOSICP-OES) with reference to the standard YS/T1006.2-2014, GB/T23367.2-2009, or YS/T1028.5-2015. The proportion of each element can be obtained by this test. By means of the proportion of each element, x, a, b, c, d, e, f, and y in the chemical formula $Li_x(Ni_aCo_bMn_c)_dM_eO_fA_y$ is determined.

In an embodiment of the present application, the composition of the element Y in the coating layer and the content thereof can be measured by inductively coupled plasma emission spectrometry (ICP). For example, elemental analysis can then be carried out by inductively coupled plasma emission spectrometry (ICP, Ametek, model: SPECTROARCOSICP-OES) with reference to the standard YS/T1006.2-2014, GB/T23367.2-2009, or YS/T1028.5-2015 to determine the composition of the element Y in the coating layer and the content thereof.

In an embodiment of the present application, the electrolyte solution further comprises an electrolyte salt and a solvent. The composition of the electrolyte solution can be determined by equipment and methods known in the art. By way of example, the organic components in the electrolyte solution can be quantitatively analyzed by gas chromatography with reference to the standard GB/T9722-2006. By way of example, the inorganic components and the lithium salt concentration in the electrolyte solution can be quantitatively analyzed by an ion chromatography analysis method with reference to the standard JY/T020-1996.

In some embodiments, the coating layer can comprise one or more of elemental substance, oxide, boride, phosphate, oxalate, carbonate, or sulfate of the element Y, or a thermal decomposition product thereof.

Herein, the term "thermal decomposition product" refers to a substance obtained by decomposing the oxide, boride, phosphate, oxalate, carbonate, or sulfate of the element Y under the condition of high temperature heating (for example, 200°C-1000°C, optionally 250°C-700°C).

Without intending to be limited by any theory or explanation, when the coating layer has the above composition, the coating layer can be more compact and uniform. Therefore, the interface stability of the positive electrode active material at a high voltage can be improved, and the DCR increase during cycling can be reduced, thus further improving the cycling performance of the battery.

In some embodiments, based on the total mass of the positive electrode active material, the content u of the element Y in ppm can satisfy $3000 \leq u \leq 15000$, for example, based on the total mass of the positive electrode active material, the content of the element Y can be 3000 ppm, 5000 ppm, 8000 ppm, 10000 ppm, 12000 ppm, 15000 ppm, or a range defined by any two of the above numerical values.

Optionally, in some embodiments, based on the total mass of the positive electrode active material, the content u of the element Y in ppm can also satisfy $5000 \leq u \leq 10000$, for example, based on the total mass of the positive electrode active material, the content of the element Y can be 5000 ppm, 6000 ppm, 7000 ppm, 8000 ppm, 9000 ppm, 10000 ppm, or a range defined by any two of the above numerical values.

Without intending to be limited by any theory or explanation, when the content of the element Y in the coating layer is in the above appropriate range, the coating layer can maintain a better lithium ion transmission performance, which is beneficial to improving the gram capacity of the positive electrode active material, thereby improving the energy density and cycling performance of the battery.

In some embodiments, the first additive can include one or more of compounds represented by Formulas 1 and 2.

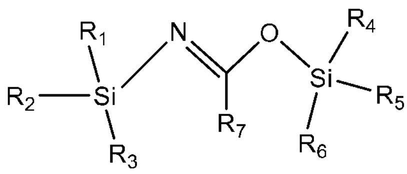
Formula 1

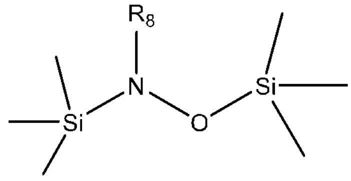
Formula 2

In Formulas 1 and 2, $R_1$, $R_2$, $R_3$, $R_4$, $R_5$, $R_6$, $R_7$, and $R_8$ each independently represent a hydrogen atom or one of the following groups, either substituted or unsubstituted: C1-C12 alkyl or alkoxy, C2-C12 alkenyl or alkenoxy, C2-C12 alkynyl or alkynoxy, C3-C12 cycloalkyl or epoxyalkyl, C1-C12 cyano or cyanooxy, C1-C12 silanyl, and optionally, substituents include halogen.

Optionally, in some embodiments, $R_1$, $R_2$, $R_3$, $R_4$, $R_5$, and $R_6$ each independently represent one of substituted or unsubstituted C1-C5 alkyl or alkoxy, substituted or unsubstituted C2-C6 alkenyl or alkenoxy, and at least one of $R_1$, $R_2$, $R_3$, $R_4$, $R_5$, and $R_6$ is C1-C3 alkyl or alkoxy. $R_7$ represents substituted or unsubstituted C1-C3 alkyl or alkoxy. $R_8$ represents one of a hydrogen atom, substituted or unsubstituted C1-C3 alkyl or alkoxy, and substituted or unsubstituted C1-C4 silanyl.

Without intending to be limited by any theory or explanation, the above compounds represented by Formulas 1 and 2 can react with the nucleophilic substance in the electrolyte solution to form low-impedance interface film on the surfaces of the positive electrode plate and the negative electrode plate. Therefore, not only can the impedance of the positive electrode plate be reduced, but also the decomposition of $LiPF_6$ can be inhibited, thereby reducing the generation of HF, inhibiting the dissolution of transition metals and improving the cycling performance of the battery at a high voltage.

In some embodiments, the first additive can include one or more of N,O-bis(trimethylsilyl)hydroxylamine, N-methyl-N,O-bis(trimethylsilyl)hydroxylamine, N,N,O-tris(trimethylsilyl)hydroxylamine, N,O-bis(trimethylsilyl)acetamide, N,O-bis(trimethylsilyl)trifluoroacetamide, N,O-bis(diethylhydrosilyl)trifluoroacetamide, N,O-bis(ethyldimethylsilyl)trifluoroacetamide, N,O-bis(propyldimethylsilyl)trifluoroacetamide, N,O-bis(tert-butyldimethylsilyl)trifluoroacetamide, or N,O-bis(propenyldimethylsilyl)trifluoroacetamide.

Optionally, in some embodiments, the first additive can include one or more of N,O-bis(trimethylsilyl)hydroxylamine, N,O-bis(trimethylsilyl)acetamide or N,O-bis(trimethylsilyl)trifluoroacetamide.

Without intending to be limited by any theory or explanation, when the first additive is selected from the above varieties of substances, the first additive is not only beneficial to further reducing the impedance of the interface film on the surface of the positive electrode plate, but also beneficial to improving the ion conductivity of the positive electrode plate. Thus, the initial DCR of the battery can be further reduced and the cycling performance of the battery can be improved.

In some embodiments, based on the total mass of the electrolyte solution, the mass percentage content v% of the first additive can satisfy $0.1 \le v \le 3$, for example, based on the total mass of the electrolyte solution, the mass percentage content of the first additive can be 0.1%, 0.5%, 0.8%, 1%, 1.5%, 2%, 2.5%, 3%, or a range defined by any two of the above numerical values.

Optionally, in some embodiments, based on the total mass of the electrolyte solution, the mass percentage content v% of the first additive can also satisfy $0.3 \le v \le 1$, for example, based on the total mass of the electrolyte solution, the mass percentage content of the first additive can be 0.3%, 0.4%, 0.5%, 0.6%, 0.7%, 0.8%, 0.9%, 1%, or a range defined by any two of the above numerical values.

Without intending to be limited by any theory or explanation, by adjusting the mass percentage content of the first additive in the electrolyte solution in the above appropriate range, the impedance of the interface film formed on the surfaces of the positive electrode plate and the negative electrode plate can be adjusted, thus facilitating the optimization of the initial DCR and the inhibition of the increase of DCR during the cycling of the battery.

Based on the total mass of the electrolyte solution, the mass percentage content v% of the first additive has the meaning commonly known in the art and can be determined by equipment and methods known in the art, for example, by gas chromatography (GC).

In some embodiments, the battery cell can satisfy $0.1 \le (u/v)\times10^{-4} \le 15$, for example, $(u/v)\times10^{-4}$ can be 0.1, 0.5, 1, 3, 5, 8, 10, 12, 15, or a range defined by any two of the above numerical values.

Optionally, in some embodiments, the battery cell can also satisfy $0.5 \le (u/v)\times10^{-4} \le 3$, $0.5 \le (u/v)\times10^{-4} \le 2.8$, $0.5 \le (u/v)\times10^{-4} \le 2.5$, $0.5 \le (u/v)\times10^{-4} \le 2$, $0.5 \le (u/v)\times10^{-4} \le 1.8$, $0.5 \le (u/v)\times10^{-4} \le 1.5$, $1 \le (u/v)\times10^{-4} \le 3$, $1 \le (u/v)\times10^{-4} \le 2.8$, $1 \le (u/v)\times10^{-4} \le 2.5$, $1 \le (u/v)\times10^{-4} \le 2$, $1 \le (u/v)\times10^{-4} \le 1.8$, $1 \le (u/v)\times10^{-4} \le 1.5$, etc.

In $(u/v)\times10^{-4}$, u in ppm represents the content of the element Y based on the total mass of the positive electrode active material; and v% represents the mass percentage content of the first additive based on the total mass of the electrolyte solution.

Without intending to be limited by any theory or explanation, when the content of the element Y is relatively high, the coating layer can have a relatively thickness, and thus, the structure of the positive electrode active material is more stable; however, the impedance thereof may also increase. When the content of the element Y and the mass percentage content of the first additive in the electrolyte solution satisfy the given relationships, the interface film formed by the first

additive on the surface of the positive electrode plate can be better complementary to the coating layer. Thus, not only can the positive electrode active material have a high structural stability, but also the positive electrode plate can have a low impedance and a good ion conductivity. Therefore, the battery cell can maintain a relatively low initial DCR and a good cycling performance at a high voltage.

In some embodiments, the electrolyte solution can further comprise a second additive, and the second additive includes one or more isocyanate compounds.

In the embodiments of the present application, the type of the isocyanate compound is not limited, and may include one or more isocyanate compounds known in the art. Optionally, in some embodiments, the second additive can include one or more of p-methylphenyl isocyanate, p-toluenesulfonyl isocyanate, trimethylsilyl isocyanate, hexamethylene diisocyanate, or isophorone diisocyanate.

Without intending to be limited by any theory or explanation, the isocyanate compound can react with water and HF in the electrolyte solution, and by breaking the carbon-nitrogen double bond, a new substance is further formed, which can thus not only significantly reduce the acidity of the electrolyte solution and the water in the electrolyte solution, leading to reduced damage to the surface of the electrode plate by HF and water, but can also improve the thermal stability of ions such as $PF_6^-$, so that the battery can still maintain a relatively high discharge capacity after being stored at a high temperature for a period of time. Therefore, the battery cell of the embodiment of the present application can have a relatively low gas production during storage, a good high-temperature cycling performance, and a good high-temperature storage performance. In addition, the isocyanate compound can also participate in the formation of the interface film on the surface of the electrode plate. Due to the special properties of the long carbon chain, the interface film formed by the isocyanate compound has a certain elasticity, so that the negative electrode interface can be better protected, thus contributing to the improvement of the long-term cycling performance of the battery at a high voltage and making the battery have a long cycling life.

In some embodiments, based on the total mass of the electrolyte solution, the mass percentage content w% of the second additive can satisfy $0.1 \leq w \leq 2$, for example, based on the total mass of the electrolyte solution, the mass percentage content of the second additive can be 0.1%, 0.5%, 0.8%, 1.2%, 1.5%, 1.8%, 2%, or a range defined by any two of the above numerical values.

Optionally, in some embodiments, based on the total mass of the electrolyte solution, the mass percentage content w% of the second additive can also satisfy $0.1 \leq w \leq 1$, for example, based on the total mass of the electrolyte solution, the mass percentage content of the second additive can be 0.1%, 0.2%, 0.3%, 0.4%, 0.5%, 0.6%, 0.7%, 0.8%, 0.9%, 1%, or a range defined by any two of the above numerical values.

When the mass percentage content of the second additive in the electrolyte solution satisfies the given range, the capacity attenuation of the battery during long-term storage at a high temperature can be inhibited.

Based on the total mass of the electrolyte solution, the mass percentage content w% of the second additive can be determined with reference to the test method for the mass percentage content v% of the first additive.

In some embodiments, the battery cell can satisfy $0.2 \leq v/w \leq 30$, for example, v/w can be 0.2, 0.5, 1, 3, 5, 8, 10, 15, 18, 20, 25, 28, 30, or a range defined by any two of the above numerical values.

Optionally, in some embodiments, the battery cell can also satisfy $0.3 \leq v/w \leq 10$, $0.3 \leq v/w \leq 8$, $0.3 \leq v/w \leq 5$, $0.3 \leq v/w \leq 2$, $0.3 \leq v/w \leq 1$, $0.5 \leq v/w \leq 10$, $0.5 \leq v/w \leq 8$, $0.5 \leq v/w \leq 5$, $0.5 \leq v/w \leq 2$, $0.5 \leq v/w \leq 1$, $1 \leq v/w \leq 10$, $2 \leq v/w \leq 8$, $3 \leq v/w \leq 5$, etc.

In v/w, v% represents the mass percentage content of the first additive based on the total mass of the electrolyte solution; and w% represents the mass percentage content of the second additive based on the total mass of the electrolyte solution.

Without intending to be limited by any theory or explanation, the mass percentage contents of the first additive and the second additive in the electrolyte solution satisfy the given relationships, the high-temperature storage performance and the high-temperature cycling performance of the battery can be further improved.

In some embodiments, the volume distribution particle size Dv50 of the positive electrode active material can be 2 μm-7 μm, and can be, for example, 2 μm, 3 μm, 4 μm, 4 μm, 5 μm, 6 μm, 7 μm, or a range defined by any two of the above numerical values.

In some embodiments, the volume distribution particle size Dv10 of the positive electrode active material can be 1 μm-3 μm, and can be, for example, 1 μm, 1.5 μm, 2 μm, 2.5 μm, 3 μm, or a range defined by any two of the above numerical values.

In some embodiments, the volume distribution particle size Dv90 of the positive electrode active material can be 5 μm-15 μm, and can be, for example, 5 μm, 8 μm, 10 μm, 12 μm, 15 μm, or a range defined by any two of the above numerical values.

Without intending to be limited by any theory or explanation, when the volume distribution particle size of the positive electrode active material satisfies the given range, the volume distribution particle size helps the positive electrode active material to have a high capacity and an appropriate lithium ion transmission path, thereby improving the energy density of the battery and prolonging the cycling life of the battery.

The volume distribution particle size of the positive electrode active material has the meaning commonly known in the art and can be determined by equipment and methods known in the art. The volume distribution particle size Dv50 refers to the corresponding particle size when the cumulative volume distribution percentage of the material reaches 50%; the volume distribution particle size Dv10 refers to the corresponding particle size when the cumulative volume distribution percentage of the material reaches 10%; and the volume distribution particle size Dv90 refers to the corresponding particle size when the cumulative volume distribution percentage of the material reaches 90%. The volume distribution particle sizes Dv50, Dv10, and Dv90 of the positive electrode active material can all be determined by laser diffraction particle size analysis. For example, it is determined by using a laser particle size analyzer (such as Malvern Master Size 3000) with reference to the standard GB/T 19077-2016.

In some embodiments, the specific surface area of the positive electrode active material can be 0.45 $m^2/g$ to 0.99 $m^2/g$, and can be, for example, 0.45 $m^2/g$, 0.50 $m^2/g$, 0.55 $m^2/g$, 0.60 $m^2/g$, 0.65 $m^2/g$, 0.70 $m^2/g$, 0.75 $m^2/g$, 0.80 $m^2/g$, 0.85 $m^2/g$, 0.90 $m^2/g$, 0.95 $m^2/g$, 0.99 $m^2/g$, or a range defined by any two of the above numerical values.

In some embodiments, the 4T powder compacted density of the positive electrode active material can be 2.5 $g/cm^3$-4.5 $g/cm^3$, and can be, for example, 2.5 $g/cm^3$, 2.8 $g/cm^3$, 3.0 $g/cm^3$, 3.2 $g/cm^3$, 3.5 $g/cm^3$, 3.8 $g/cm^3$, 4.0 $g/cm^3$, 4.2 $g/cm^3$, 4.5 $g/cm^3$, or a range defined by any two of the above numerical values.

Without intending to be limited by any theory or explanation, when the specific surface area and/or 4T powder compacted density of the positive electrode active material satisfy the given ranges, the specific surface area and/or 4T powder compacted density are beneficial to improving the gram capacity of the positive electrode active material and the electrolyte solution infiltration performance on the positive electrode plate, thereby facilitating the improvement of the energy density and rate performance of the battery.

The specific surface area of the positive electrode active material has the meaning commonly known in the art and can be determined by equipment and methods known in the art. By way of example, nitrogen adsorption-based specific surface area analysis and testing method can be carried out by Tri-Star 3020 specific surface area and pore size analysis tester from US Micromeritics with reference to GB/T 19587-2017, and the specific surface area of the material is calculated by a BET (Brunauer Emmett Teller) method.

The 4T powder compacted density of the positive electrode active material has the meaning commonly known in the art and can be determined by equipment and methods known in the art. By way of example, the compacted density of the positive electrode active material under the pressure of 4T (i.e., under the pressure of 4 tons) can be determined with reference to GB/T 24533-2009. Specifically, a certain amount of the positive electrode active material powder can be taken and placed in a specialized compaction mold, and the mold is then placed on a compacted density instrument. A pressure of 4T is applied, the thickness of the powder under the pressure of 4T (thickness after pressure relief) is read on the device, and the powder compacted density $\rho$ of the positive electrode active material is calculated by $\rho = m/v$. In some embodiments, in the battery cell of the embodiment of the present application, the positive electrode plate of the electrode assembly can comprise a positive electrode current collector and a positive electrode film layer arranged on at least one surface of the positive electrode current collector and comprising a positive electrode active material. For example, the positive electrode current collector has two opposite surfaces in the direction of its own thickness, and the positive electrode film layer is provided on either or both of the two opposite surfaces of the positive electrode current collector.

In some embodiments, the positive electrode film layer further comprises optionally a positive electrode conductive agent. In the present application, the type of the positive electrode conductive agent is not particularly limited. By way of example, the positive electrode conductive agent includes at least one of superconducting carbon, conductive graphite, acetylene black, carbon black, Ketjen black, carbon dots, carbon nanotubes, graphene, and carbon nanofibers.

In some embodiments, the positive electrode film layer further comprises optionally a positive electrode binder. In the present application, the type of the positive electrode binder is not particularly limited. By way of example, the positive electrode binder can include at least one of polyvinylidene fluoride (PVDF), polytetrafluoroethylene (PTFE), a vinylidene fluoridetetrafluoroethylene-propylene terpolymer, a vinylidene fluoride-hexafluoropropylenetetrafluoroethylene terpolymer, a tetrafluoroethylene-hexafluoropropylene copolymer, and a fluorine-containing acrylate resin.

In some embodiments, the positive electrode current collector may be a metal foil or a composite current collector. As an example of the metal foil, an aluminum foil may be used. The composite current collector may include a high molecular material substrate layer and a metal material layer formed on at least one surface of the high molecular material substrate layer. By way of example, the metal material may include at least one of aluminum, an aluminum alloy, nickel, a nickel alloy, titanium, a titanium alloy, silver, and a silver alloy. By way of example, the high molecular material substrate layer may include at least one of polypropylene (PP), polyethylene terephthalate (PET), polybutylene terephthalate (PBT), polystyrene (PS), and polyethylene (PE).

The positive electrode film layer is usually formed by coating the positive electrode current collector with a positive electrode slurry, followed by drying and cold pressing. The positive electrode slurry is generally formed by dispersing the positive electrode active material, the optional conductive agent, the optional binder and any other components in a solvent and sufficiently stirring the mixture. The solvent may be N-methyl pyrrolidone (NMP), but is not limited thereto.

In some embodiments, in the battery cell of the embodiment of the present application, the negative electrode

plate of the electrode assembly can comprise a negative electrode current collector and a negative electrode film layer arranged on at least one surface of the negative electrode current collector and comprising a negative electrode active material. For example, the negative electrode current collector has two surfaces opposite in its own thickness direction, and the negative electrode film layer is arranged on either or both of the two opposite surfaces of the negative electrode current collector.

The positive electrode active material may be a negative electrode active material for a secondary battery well-known in the art. By way of example, the negative electrode active material may include, but is not limited to, at least one of natural graphite, artificial graphite, soft carbon, hard carbon, a silicon-based material, a tin-based material, and lithium titanate. The silicon-based material may include at least one of elemental silicon, silicon oxide, a silicon-carbon composite, a silicon-nitrogen composite, and a silicon alloy material. The tin-based material may include at least one of elemental tin, tin oxide, and a tin alloy material.

In some embodiments, the negative electrode film layer further comprises optionally a negative electrode conductive agent. In the present application, the type of the negative electrode conductive agent is not particularly limited. By way of example, the negative electrode conductive agent can include at least one of superconducting carbon, conductive graphite, acetylene black, carbon black, Ketjen black, carbon dots, carbon nanotubes, graphene, and carbon nanofibers.

In some embodiments, the negative electrode film layer further comprises optionally a negative electrode binder. In the present application, the type of the negative electrode binder is not particularly limited. By way of example, the negative electrode binder may include at least one of styrene butadiene rubber (SBR), water-soluble unsaturated resin SR-1B, water-based acrylic resin (such as polyacrylic acid (PAA), polymethacrylic acid (PMAA), and polyacrylic acid sodium (PAAS)), polyacrylamide (PAM), polyvinyl alcohol (PVA), sodium alginate (SA), and carboxymethyl chitosan (CMCS).

In some embodiments, the negative electrode film layer further comprises optionally other auxiliaries. By way of example, the other auxiliaries may include a thickener, such as carboxymethyl cellulose sodium (CMC) and a PTC thermistor material.

In some embodiments, the negative electrode current collector may be a metal foil or a composite current collector. As an example of the metal foil, a copper foil may be used. The composite current collector may include a high molecular material substrate layer and a metal material layer formed on at least one surface of the high molecular material substrate layer. By way of example, the metal material may include at least one of copper, a copper alloy, nickel, a nickel alloy, titanium, a titanium alloy, silver, and a silver alloy. By way of example, the high molecular material substrate layer may include at least one of polypropylene (PP), polyethylene terephthalate (PET), polybutylene terephthalate (PBT), polystyrene (PS), and polyethylene (PE).

The negative electrode film layer is usually formed by coating the negative electrode current collector with a negative electrode slurry, followed by drying and cold pressing. The negative electrode slurry is generally formed by dispersing the negative electrode active material, the optional conductive agent, the optional binder, and the other optional auxiliaries in a solvent and uniformly stirring the mixture. The solvent may be N-methyl pyrrolidone (NMP) or deionized water, but not limited thereto.

The negative electrode plate does not exclude other additional functional layers other than the negative electrode film layer. For example, in some embodiments, the negative electrode plate further comprises a conductive base coating layer (e.g., composed of a conductive agent and a binder) sandwiched between the negative electrode current collector and the negative electrode film layer and arranged on a surface of the negative electrode current collector. In some embodiments, the negative electrode plate of the present application further comprises a protective layer covering a surface of the negative electrode film layer.

In the embodiments of the present application, the type of the separator film used for the electrode assembly in the battery cell is not particularly limited, and any well-known porous structure separator film with good chemical stability and mechanical stability can be selected.

In some embodiments, the material of the separator film can include at least one of glass fibers, non-woven fabric, polyethylene, polypropylene, and polyvinylidene fluoride. The separator film may be a single-layer thin film or a multi-layer composite thin film. When the separator film is a multi-layer composite thin film, the materials of the layers may be the same or different.

In some embodiments, the positive electrode plate, the separator film, and the negative electrode plate may be made into an electrode assembly by a winding process or a stacking process.

In the battery cell of the embodiment of the present application, the electrolyte solution further comprises an electrolyte salt and a solvent. The types of the electrolyte salt and the solvent are not particularly limited and may be selected according to actual demands.

By way of example, the electrolyte salt may include, but is not limited to, at least one of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bis(fluorosulfonyl)imide (LiFSI), lithium bis(trifluoromethanesulfonyl)imide (LiTFSI), lithium trifluoromethanesulfonate

(LiTFS), lithium difluoro(oxalato)borate (LiDFOB), lithium bis(oxalato)borate (LiBOB), lithium difluorophosphate ($LiPO_2F_2$), lithium difluorobis(oxalato)phosphate (LiDFOP), and lithium tetrafluoro(oxalato)phosphate (LiTFOP).

By way of example, the solvent may include but is not limited to at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), gamma-butyrolactone (GBL), sulfolane (SF), methylsulfonylmethane (MSM), ethyl methyl sulfone (EMS) and ethylsulfonylethane (ESE).

In some embodiments, the electrolyte solution further comprises optionally other additives. For example, the additive may include an additive capable of improving certain performances of a battery, such as an additive for improving the overcharging performance of a battery, an additive for improving the high-temperature performance of the battery, and an additive for improving the low-temperature power performance of the battery.

In some embodiments, the positive electrode plate, the separator film, and the negative electrode plate may be made into an electrode assembly by a winding process and/or a stacking process.

In some embodiments, the battery cell can comprise an outer package. The outer package can be used for encapsulating the above electrode assembly and electrolyte solution.

In some embodiments, the outer package of the battery cell can be a hard shell, such as a hard plastic shell, an aluminum shell, or a steel shell. The outer package of the battery cell may also be a soft bag, such as a pouch-type soft bag. The material of the soft package can be plastic, such as at least one of polypropylene (PP), polybutylene terephthalate (PBT), and polybutylene succinate (PBS).

In the present application, the shape of the battery cell is not particularly limited and may be cylindrical, prismatic, or in any other shape. FIG. 1 is a battery cell 5 with a prismatic structure as an example.

In some embodiments, as shown in FIG. 2, the outer package may comprise a case 51 and a cover plate 53. The case 51 can comprise a bottom plate and a side plate connected to the bottom plate, and the bottom plate and the side plate enclose to form an accommodating cavity. The case 51 has an opening in communication with the accommodating cavity, and the cover plate 53 is configured to cover the opening to close the accommodating cavity. The positive electrode plate, the negative electrode plate, and the separator film may form an electrode assembly 52 by a winding process and/or a stacking process. The electrode assembly 52 is encapsulated in the accommodating cavity. An electrolyte solution infiltrates into the electrode assembly 52. The number of the electrode assemblies 52 comprised in the battery cell 5 can be one or more and can be adjusted according to needs.

The preparation method for the battery cell is well known. In some embodiments, the positive electrode plate, the separator film, the negative electrode plate, and the electrolyte solution may be assembled to form the battery cell. By way of example, the positive electrode plate, the separator film, and the negative electrode plate may form an electrode assembly by a winding process and/or a stacking process; the electrode assembly is placed in an outer package and dried; an electrolyte solution is then injected therein; and after processes such as vacuum encapsulation, standing, formation, and shaping, the battery cell is obtained.

## Battery

The battery mentioned in the embodiments of the present application may be a single physical module comprising one or more battery cells to provide a higher voltage and capacity. When a plurality of battery cells are provided, the plurality of battery cells are connected in series, in parallel, or in parallel-series via a busbar component.

In some embodiments, the battery can be a battery module. When a plurality of battery cells are provided, the plurality of battery cells are arranged and fixed to form a battery module. FIG. 3 is a schematic view of a battery module 4 as an example. As shown in FIG. 3, in the battery module 4, a plurality of battery cells 5 can be sequentially arranged in the length direction of the battery module 4. Of course, any other arrangements are also possible. The plurality of battery cells 5 may further be fixed by fasteners. Optionally, the battery module 4 may further comprise a shell having an accommodating space, in which the plurality of battery cells 5 are accommodated.

In some embodiments, the battery can be a battery pack. The battery pack comprises a box body and a battery cell. The battery cell or the battery module is accommodated in the box body. The number of battery modules contained in the battery pack can be adjusted according to the application and capacity of the battery pack.

FIGs. 4 and 5 are schematic views of a battery pack 1 as an example. As shown in FIGs. 4 and 5, the battery pack 1 can comprise a battery box and a plurality of battery modules 4 arranged in the battery box. The battery box comprises an upper box 2 and a lower box 3. The upper box 2 is used for covering the lower box 3 to form an enclosed space for accommodating the battery module 4. The plurality of battery modules 4 may be arranged in the battery box in any manner.

## Electrical apparatus

An embodiment of the present application further provides an electrical apparatus. The electrical apparatus comprises the battery cell or battery provided in the embodiment of the present application. The battery cell or battery may be used either as a power source of the electrical apparatus or as an energy storage unit of the electrical apparatus. The electrical apparatus may be, but is not limited to, a mobile device (such as a mobile phone or a laptop), an electric vehicle (such as an all-electric vehicle, a hybrid electric vehicle, a plug-in hybrid electric vehicle, an electric bicycle, an electric scooter, an electric golf cart, or an electric truck), an electric train, a ship, a satellite, an energy storage system, etc.

For the electrical apparatus, the battery cell or battery may be selected according to the use requirements thereof.

FIG. 6 is a schematic view of an electrical apparatus as an example. The electrical apparatus is an all-electric vehicle, a hybrid electric vehicle, a plug-in hybrid electric vehicle, etc. To satisfy the need of the electrical apparatus for a high power and high energy density, a battery pack or a battery module can be used.

As another example, the electrical apparatus can be a mobile phone, a tablet computer, a laptop, etc. The electrical apparatus is generally required to be thin and light, and may use a battery cell as a power source.

## Examples

The following embodiments more specifically describe the contents disclosed in the present application. These embodiments are intended for illustrative purposes only, because various modifications and changes made within the scope of the contents disclosed in the present application will be apparent to those skilled in the art. Unless otherwise specified, all parts, percentages, and ratios reported in the following embodiments are based on the mass, all reagents used in the embodiments are either commercially available or synthesized according to conventional methods, and can be directly used without further processing, and all the instruments used in the embodiments are commercially available.

### Example 1

Preparation of positive electrode plate

Coated $Li(Ni_{0.55}Co_{0.06}Mn_{0.39})_{0.996}Al_{0.001}W_{0.002}Zr_{0.001}O_2$ as a positive electrode active material, carbon black (Super P) as a conductive agent, and polyvinylidene fluoride (PVDF) as a binder were uniformly mixed in N-methyl pyrrolidone (NMP) as an appropriate solvent in a mass ratio of 98:1:1 to obtain a positive electrode slurry, the positive electrode slurry was applied to an aluminum foil as a positive electrode current collector, and by processes such as drying, cold pressing, slitting and cutting, a positive electrode plate was obtained. The coating layer of the positive electrode active material comprises element Y, and the element Y includes Nb, Sb, and Ti, Nb, Sb, and Ti. The total content of the element Y is 10000 ppm.

Preparation of negative electrode plate

Artificial graphite as a negative electrode active material, carbon black (Super P) as a conductive agent, styrene butadiene rubber (SBR) as a binder, and carboxymethyl cellulose sodium (CMC) were uniformly mixed in an appropriate amount of deionized water as a solvent in a mass ratio of 97:1:1:1 to obtain a negative electrode slurry, the negative electrode slurry was applied to a copper foil as a negative electrode current collector, and after drying, cold pressing, slitting, and cutting processes, a negative electrode plate was obtained.

Preparation of separator film

A polypropylene film was used as the separator film.

Preparation of electrolyte solution

Ethylene carbonate (EC), dimethyl carbonate (DMC), and methyl ethyl carbonate (EMC) were mixed in a mass ratio of 20:10:70 to obtain an organic solvent, and fully dried $LiPF_6$ was dissolved in the above organic solvent such that the concentration of $LiPF_6$ was 1 mol/L. The mixture was then mixed with N,O-bis(trimethylsilyl)acetamide, fluoroethylene carbonate (FEC), and 1,3-propane sultone (PS) as a first additive to obtain an electrolyte solution. In the electrolyte solution, the mass percentage content v% of the first additive was 0.1%, and the mass percentage contents of FEC and PS were 1.5% and 1%, respectively.

Preparation of secondary battery

The positive electrode plate, the separator film, and the negative electrode plate were stacked in sequence and wound to obtain an electrode assembly; and the electrode assembly was placed in an outer package and dried, the electrolyte solution was then injected, and after processes such as vacuum encapsulation, standing, formation, and shaping, the secondary battery was obtained.

The secondary batteries of Examples 2-13 and Comparative Examples 1-4 were similar to Example 1, except that the preparation parameters of the positive electrode active material or the electrolyte solution were adjusted, as shown in Table 1 for details.

The secondary batteries of Examples 14-17 and 20-21 were similar to Example 3, except that a second additive was added to the electrolyte solution; the secondary battery of Example 18 was similar to Example 1, except that a second additive was added to the electrolyte solution; and the secondary battery of Example 19 was similar to Example 5, except that a second additive was added to the electrolyte solution. The detail was shown in Table 2.

## Test section

(1) Initial DCR test

At 25°C, the secondary battery was charged to 4.5 V at a constant current of 0.33 C, then charged to a current of 0.05 C at a constant voltage of 4.5 V, left for 5 minutes, and then discharged at 0.5 C for 1 hour. After leaving for 1 hour, the secondary battery was discharged at a current of 4 C for 30 seconds. The initial voltage V1 at the beginning of discharge and the voltage V2 after 30 seconds of discharge were recorded. The current corresponding to the initial DCR = (V1-V2)/4C was obtained.

(2) Cycling DCR increase rate test

At 25°C, the secondary battery was charged to 4.5 V at a constant current of 0.33 C, then charged to a current of 0.05 C at a constant voltage of 4.5 V, left for 5 minutes, and then discharged at 0.5 C for 1 hour. After leaving for 1 hour, the secondary battery was discharged at a current of 4 C for 30 seconds. The initial voltage V1 at the beginning of discharge and the voltage V2 after 30 seconds of discharge were recorded. The current corresponding to the initial DCR = (V1-V2)/4C was obtained.

Then, the secondary battery was charged to 4.5 V at a constant current of 0.5 C, then charged to a cutoff current of 0.05 C at a constant voltage of 4.5 V, left for 5 minutes, then discharged to 2.8 V at a constant current of 1 C, and left for 5 minutes. This was one charge-discharge cycle. This cycle step was repeated for the same secondary battery.

After 1000 cycles, the secondary battery was charged to 4.5 V at a constant current of 0.33 C, then charged to a current of 0.05 C at a constant voltage of 4.5 V, left for 5 minutes, and then discharged at 0.5 C for 1 hour. After leaving for 1 hour, the secondary battery was discharged at a current of 4 C for 30 seconds. The initial voltage V3 at the beginning of discharge and the voltage V4 after 30 seconds of discharge were recorded. The current corresponding to the initial DCR = (V3-V4)/4C at the 1000th cycle was calculated.

$$\text{Cycling DCR increase (\%)} = (\text{DCR at the 1000th cycle - initial DCR}) / \text{initial DCR} \times 100\%.$$

(3) High-temperature storage performance test

At 25°C, the battery was charged at a constant current of 0.33 C to a stop voltage of 4.5 V, then charged at a constant voltage of 4.5 V to a cutoff current of 0.05 C, left for 5 minutes, and then discharged at a constant current of 0.33 C to a stop voltage of 2.8 V, thus obtaining the initial discharge capacity.

The secondary battery was charged at a constant current of 0.33 C to a stop voltage of 4.5 V, then charged at a constant voltage of 4.5 V to a stop current of 0.05 C, and then stored in an environment at 60°C for 3 months. Thereafter, the secondary battery was taken out and cooled to 25°C. At 25°C, the battery was discharged at a constant current of 0.33 C to 2.8 V, then charged at a constant current of 0.33 C to a stop voltage of 4.5 V, then charged at a constant voltage of 4.5 V to a cutoff current of 0.05 C, left for 5 minutes, and then discharged at a constant current of 0.33 C to a stop voltage of 2.8 V, thus obtaining the discharge capacity after high-temperature storage.

High-temperature storage capacity maintenance rate (%) = (discharge capacity after high-temperature storage / initial discharge capacity) × 100%.

The test results are as shown in Tables 1 and 2 in detail.

Table 1

| No. | Positive electrode active material | Coating element Y | u/p pm | First additive | v/ % | (u/v) $\times 10^{-4}$ | Initial DCR (mΩ) | DCR increase rate | High-temperature storage capacity maintenance rate |
|---|---|---|---|---|---|---|---|---|---|
| Example 1 | $Li(Ni_{0.55}Co_{0.06}Mn_{0.39})_{0.996}Al_{0.001}W_{0.002}Zr_{0.001}O_2$ | Nb,Sb,T i | 10 00 0 | N,O-bis(trimethylsilyl)acetamide | 0.1 | 10.00 | 26.7 | 57% | 86% |
| Example 2 | $Li(Ni_{0.55}Co_{0.06}Mn_{0.39})_{0.996}Al_{0.001}W_{0.002}Zr_{0.001}O_2$ | Nb,Sb,T i | 10 00 0 | N,O-bis(trimethylsilyl)acetamide | 0.5 | 2.00 | 25.5 | 53% | 88% |
| Example 3 | $Li(Ni_{0.55}Co_{0.06}Mn_{0.39})_{0.996}Al_{0.001}W_{0.002}Zr_{0.001}O_2$ | Nb,Sb,T i | 10 00 0 | N,O-bis(trimethylsilyl)acetamide | 1 | 1.00 | 25.9 | 51% | 89% |
| Example 4 | $Li(Ni_{0.55}Co_{0.06}Mn_{0.39})_{0.996}Al_{0.001}W_{0.002}Zr_{0.001}O_2$ | Nb,Sb,T i | 10 00 0 | N,O-bis(trimethylsilyl)acetamide | 2 | 0.50 | 26.6 | 52% | 86% |
| Example 5 | $Li(Ni_{0.55}Co_{0.06}Mn_{0.39})_{0.996}Al_{0.001}W_{0.002}Zr_{0.001}O_2$ | Nb,Sb,T i | 10 00 0 | N,O-bis(trimethylsilyl)acetamide | 3 | 0.33 | 27.4 | 54% | 85% |
| Example 6 | $Li(Ni_{0.55}Co_{0.06}Mn_{0.39})_{0.996}Al_{0.001}W_{0.002}Zr_{0.001}O_2$ | Nb,Sb,T i | 30 00 | N,O-bis(trimethylsilyl)acetamide | 3 | 0.10 | 26.8 | 60% | 82% |
| Example 7 | $Li(Ni_{0.55}Co_{0.06}Mn_{0.39})_{0.996}Al_{0.001}W_{0.002}Zr_{0.001}O_2$ | Nb,Sb,T i | 30 00 | N,O-bis(trimethylsilyl)acetamide | i | 0.30 | 25.3 | 58% | 84% |
| Example 8 | $Li(Ni_{0.55}Co_{0.06}Mn_{0.39})_{0.996}Al_{0.001}W_{0.002}Zr_{0.001}O_2$ | Nb,Sb,T i | 50 00 | N,O-bis(trimethylsilyl)acetamide | 1 | 0.50 | 25.8 | 56% | 86% |
| Example 9 | $Li(Ni_{0.55}Co_{0.06}Mn_{0.39})_{0.996}Al_{0.001}W_{0.002}Zr_{0.001}O_2$ | Nb,Sb,T i | 12 00 0 | N,O-bis(trimethylsilyl)acetamide | 1 | 1.20 | 27.0 | 54% | 87% |
| Example 10 | $Li(Ni_{0.55}Co_{0.06}Mn_{0.39})_{0.996}Al_{0.001}W_{0.002}Zr_{0.001}O_2$ | Nb,Sb,T i | 15 00 0 | N,O-bis(trimethylsilyl)acetamide | 1 | 1.50 | 27.5 | 55% | 85% |
| Example 11 | $Li(Ni_{0.55}Co_{0.06}Mn_{0.39})_{0.996}Al_{0.001}W_{0.002}Zr_{0.001}O_2$ | Nb,Sb,T i | 15 00 0 | N,O-bis(trimethylsilyl)acetamide | 0.1 | 15.00 | 28.2 | 57% | 83% |
| Example 12 | $Li(Ni_{0.55}Co_{0.06}Mn_{0.39})_{0.996}Al_{0.001}W_{0.002}Zr_{0.001}O_2$ | Nb,Sb,T i | 10 00 0 | N,O-bis(trimethylsilyl)trifluoroacetamide | 1 | 1.00 | 25.7 | 49% | 88% |
| Example | $Li(Ni_{0.55}Co_{0.06}Mn_{0.39})$ | Nb,Sb,T | 10 | N,O- | 1 | 1.00 | 26.3 | 53% | 87% |
| 13 | $_{0.996}Al_{0.001}W_{0.002}Zr_{0.001}O_2$ | i | 00 0 | bis(trimethylsilyl)hydroxylamine | | | | | |

(continued)

| No. | Positive electrode active material | Coating element Y | u/p pm | First additive | v/ % | (u/v) $\times 10^{-4}$ | Initial DCR (mΩ) | DCR increase rate | High-temperature storage capacity maintenance rate |
|---|---|---|---|---|---|---|---|---|---|
| Comparative Example 1 | $Li(Ni_{0.55}Co_{0.06}Mn_{0.39})_{0.996}Al_{0.001}W_{0.002}Zr_{0.001}O_2$ | / | / | None | / | / | 30.3 | 90% | 74% |
| Comparative Example 2 | $LiNi_{0.55}Co_{0.06}Al_{0.39}O_2$ | / | / | N,O-bis(trimethylsilyl)acetamide | 1 | / | 29.1 | 87% | 76% |
| Comparative Example 3 | $Li(Ni_{0.55}Co_{0.06}Mn_{0.39})_{0.996}Al_{0.001}W_{0.002}Zr_{0.001}O_2$ | / | / | N,O-bis(trimethylsilyl)acetamide | 1 | / | 28.8 | 85% | 77% |
| Comparative Example 4 | $Li(Ni_{0.55}Co_{0.06}Mn_{0.39})_{0.996}Al_{0.001}W_{0.002}Zr_{0.001}O_2$ | Nb,Sb,T i | 10 00 0 | None | / | / | 29.7 | 64% | 80% |

Table 2

| No. | First additive | v/ % | Second additive | w/ % | v/ w | Initial DCR (mΩ) | DCR increase rate | High-temperature storage capacity maintenanc e rate |
|---|---|---|---|---|---|---|---|---|
| Example 3 | N,O-bis(tri-methylsilyl)aceta-mide | 1 | / | / | / | 25.9 | 51% | 89% |
| Example 14 | N,O-bis(tri-methylsilyl)aceta-mide | 1 | Hexamethylene diisocyanate | 0.1 | 10 | 26.2 | 51% | 90% |
| Example 15 | N,O-bis(tri-methylsilyl)aceta-mide | 1 | Hexamethylene diisocyanate | 0.5 | 2 | 26.6 | *50%* | 92% |
| Example 16 | N,O-bis(tri-methylsilyl)aceta-mide | 1 | Hexamethylene diisocyanate | 1 | 1 | 27.4 | 49% | 93% |
| Example 17 | N,O-bis(tri-methylsilyl)aceta-mide | 1 | Hexamethylene diisocyanate | 2 | 0.5 | 28.0 | 49% | 93% |
| Example 1 | N,O-bis(tri-methylsilyl)aceta-mide | 0.1 | / | / | / | 26.7 | 57% | 86% |
| Example 18 | N,O-bis(tri-methylsilyl)aceta-mide | 0.1 | Hexamethylene diisocyanate | 0.5 | 0.2 | 27.5 | 55% | 90% |
| Example 5 | N,O-bis(tri-methylsilyl)aceta-mide | 3 | / | / | / | 27.4 | 54% | 85% |
| Example 19 | N,O-bis(tri-methylsilyl)aceta-mide | 3 | Hexamethylene diisocyanate | 0.1 | 30 | 27.9 | 53% | 86% |
| Example 20 | N,O-bis(tri-methylsilyl)aceta-mide | I | Trimethylsilyl isocyanate | 0.5 | 2 | 26.7 | *50%* | 93% |
| Example 21 | N,O-bis(tri-methylsilyl)aceta-mide | 1 | Isophorone dii-socyanate | 0.5 | 2 | 27.0 | 51% | 92% |

As can be seen from the test results in Tables 1 and 2, in the secondary battery, the positive electrode active material has the structure and element composition defined in the examples of the present application, and the electrolyte solution comprises a first additive, so that the initial DCR of the battery can be effectively reduced and the cycling DCR increase of the battery in a high-voltage environment is inhibited. Therefore, it is beneficial to improving the cycling performance of the battery at a high voltage. When the electrolyte solution further comprises a second additive, the cycling DCR increase of the battery in a high-voltage environment can be further inhibited, and the high-temperature storage performance of the battery is improved.

In contrast, in the secondary battery of Comparative Example 1, the positive electrode active material does not comprise a coating layer, and the electrolyte solution does not comprise a first additive, so that the initial DCR and cycling DCR increase rates thereof are both much higher than those of Examples 1-21, and the high-temperature storage performance is much lower than that of Examples 1-21. In the secondary batteries of Comparative Examples 2 and 3, the positive electrode active material does not comprise a coating layer. Although the electrolyte solution thereof comprises a first additive, the cycling DCR increase rate and high-temperature storage performance of the battery are still not ideal. In the secondary battery of Comparative Example 4, the electrolyte solution does not comprise a first additive. Although the

positive electrode active material thereof is the same as Examples 1-21, the cycling DCR increase rate and high-temperature storage performance of the battery are also not ideal.

The given compounds which are not listed in the examples are all applicable to the technical solution of the present invention due to the fact that they are similar to the compounds listed in the examples in chemical properties and the reaction properties presented when participating in electrochemical reactions, so they are not exhaustively enumerated here.

It should be noted that the present application is not limited to the above embodiments. The above embodiments are examples only, and any embodiment that has substantially the same constitutions and has the same effects as the technical ideas within the scope of the technical solutions of the present application is encompassed within the technical scope of the present application. In addition, without departing from the gist of the present application, various modifications that can be conceived by those skilled in the art and applied to the embodiments, and other modes constructed by combining some of the components in the embodiments are also included in the scope of the present application.

## Claims

1. A battery cell, comprising a positive electrode plate and an electrolyte solution, wherein

   the positive electrode plate comprises a positive electrode active material, and the positive electrode active material comprises an inner core and a coating layer coating the inner core;
   the inner core comprises $Li_x(Ni_aCo_bMn_c)_dM_eO_fA_y$, where $0.2 \leq x \leq 1.3$, $0.3 \leq a \leq 0.7$, $0.01 \leq b \leq 0.15$, $0.1 \leq c \leq 0.5$, $0.95 \leq d \leq 1$, $0 \leq e \leq 0.05$, $1.8 \leq f \leq 2$, and $0 \leq y \leq 0.1$, M includes one or more of Zr, Sr, B, Ti, Mg, Sn, Tb, W, Nb, Sb, or Al, and A includes one or more of S, N, F, Cl, Br, or I;
   the coating layer comprises element Y, and the element Y includes one or more of Co, Zr, Sr, B, Ti, Mg, Sn, Tb, W, Nb, Sb, or Al; and
   the electrolyte solution comprises a first additive, and the first additive includes an organic substance comprising a Si-N bond and a Si-O bond.

2. The battery cell according to claim 1, wherein
   the coating layer comprises one or more of elemental substance, oxide, boride, phosphate, oxalate, carbonate, or sulfate of the element Y, or a thermal decomposition product thereof.

3. The battery cell according to claim 1 or 2, wherein

   based on the total mass of the positive electrode active material, the content u of the element Y in ppm satisfies $3000 \leq u \leq 15000$;
   optionally $5000 \leq u \leq 10000$.

4. The battery cell according to any one of claims 1-3, wherein the first additive includes one or more of compounds represented by Formulas 1 and 2,

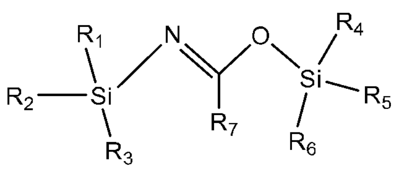 Formula 1 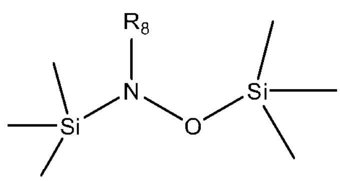 Formula 2

   where $R_1$, $R_2$, $R_3$, $R_4$, $R_5$, $R_6$, $R_7$, and $R_8$ each independently represent a hydrogen atom or one of the following groups, either substituted or unsubstituted:

   C1-C12 alkyl or alkoxy, C2-C12 alkenyl or alkenoxy, C2-C12 alkynyl or alkynoxy, C3-C12 cycloalkyl or epoxyalkyl, C1-C12 cyano or cyanooxy, C1-C12 silanyl, and optionally, substituents include halogen; and
   optionally, $R_1$, $R_2$, $R_3$, $R_4$, $R_5$, and $R_6$ each independently represent one of substituted or unsubstituted C1-C5 alkyl or alkoxy, and substituted or unsubstituted C2-C6 alkenyl or alkenoxy, and at least one of $R_1$, $R_2$, $R_3$, $R_4$, $R_5$, and $R_6$ is C1-C3 alkyl or alkoxy; $R_7$ represents substituted or unsubstituted C1-C3 alkyl or alkoxy; and $R_8$

represents one of a hydrogen atom, substituted or unsubstituted C1-C3 alkyl or alkoxy, and substituted or unsubstituted C1-C4 silanyl.

**5.** The positive electrode active material according to any one of claims 1-4, wherein

the first additive includes one or more of N,O-bis(trimethylsilyl)hydroxylamine, N-methyl-N,O-bis(trimethylsilyl) hydroxylamine, N,N,O-tris(trimethylsilyl)hydroxylamine, N,O-bis(trimethylsilyl)acetamide, N,O-bis(trimethylsilyl)trifluoroacetamide, N,O-bis(diethylhydrosilyl)trifluoroacetamide, N,O-bis(ethyldimethylsilyl)trifluoroacetamide, N,O-bis(propyldimethylsilyl)trifluoroacetamide, N,O-bis(tert-butyldimethylsilyl)trifluoroacetamide, or N,O-bis(propenyldimethylsilyl)trifluoroacetamide; and
optionally, the first additive includes one or more of N,O-bis(trimethylsilyl)hydroxylamine, N,O-bis(trimethylsilyl) acetamide or N,O-bis(trimethylsilyl)trifluoroacetamide.

**6.** The battery cell according to any one of claims 1-5, wherein

based on the total mass of the electrolyte solution, the mass percentage content v% of the first additive satisfies $0.1 \leq v \leq 3$;
optionally $0.3 \leq v \leq 1$.

**7.** The battery cell according to any one of claims 1-6, wherein

the battery cell satisfies $0.1 \leq (u/v)\times10^{-4} \leq 15$, optionally $0.5 \leq (u/v)\times10^{-4} \leq 3$,
where u in ppm represents the content of the element Y based on the total mass of the positive electrode active material; and v% represents the mass percentage content of the first additive based on the total mass of the electrolyte solution.

**8.** The battery cell according to any one of claims 1-7, wherein

the electrolyte solution further comprises a second additive, and the second additive includes one or more isocyanate compounds; and
optionally, the second additive includes one or more of p-methylphenyl isocyanate, p-toluenesulfonyl isocyanate, trimethylsilyl isocyanate, hexamethylene diisocyanate, or isophorone diisocyanate.

**9.** The battery cell according to claim 8, wherein

based on the total mass of the electrolyte solution, the mass percentage content w% of the second additive satisfies $0.1 \leq w \leq 2$;
optionally $0.1 \leq w \leq 1$.

**10.** The battery cell according to claim 8 or 9, wherein

the battery cell satisfies $0.2 \leq v/w \leq 30$, optionally $0.3 \leq v/w \leq 10$,
where v% represents the mass percentage content of the first additive based on the total mass of the electrolyte solution; and w% represents the mass percentage content of the second additive based on the total mass of the electrolyte solution.

**11.** The battery cell according to any one of claims 1-10, wherein

the volume distribution particle size Dv50 of the positive electrode active material is 2 μm-7 μm; and/or
the volume distribution particle size Dv10 of the positive electrode active material is 1 μm-3 μm; and/or
the volume distribution particle size Dv90 of the positive electrode active material is 5 μm-15 μm.

**12.** The battery cell according to any one of claims 1-11, wherein

the specific surface area of the positive electrode active material is 0.45 $m^2/g$-0.99 $m^2/g$; and/or
the 4T powder compacted density of the positive electrode active material is 2.5 $g/cm^3$-4.5 $g/cm^3$.

**13.** A battery, comprising the battery cell according to any one of claims 1-12.

**14.** An electrical apparatus, comprising the battery cell according to any one of claims 1-12 or the battery according to claim 13.

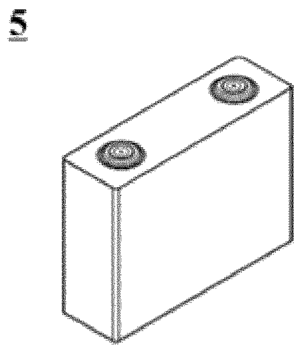


FIG. 1

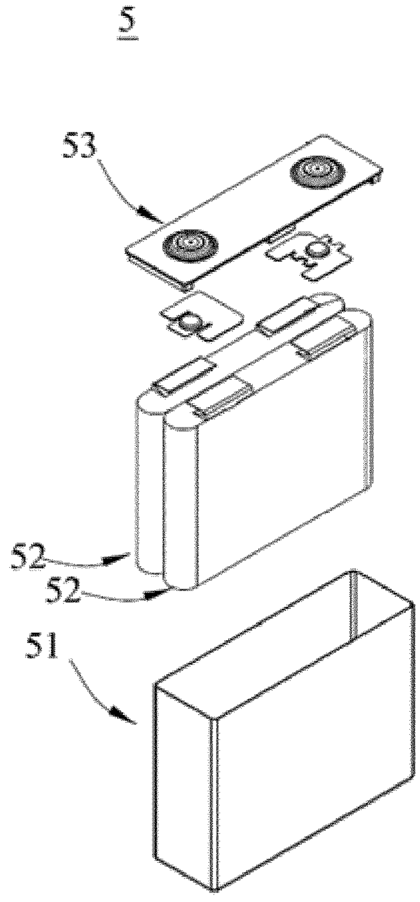


FIG. 2

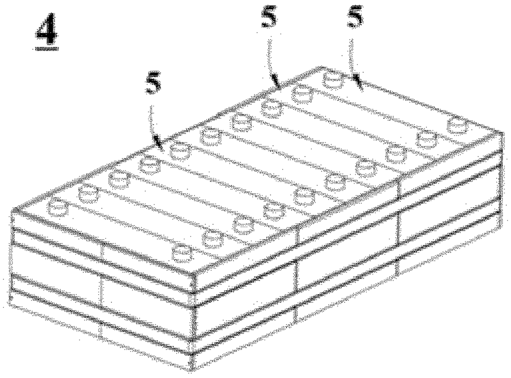


FIG. 3

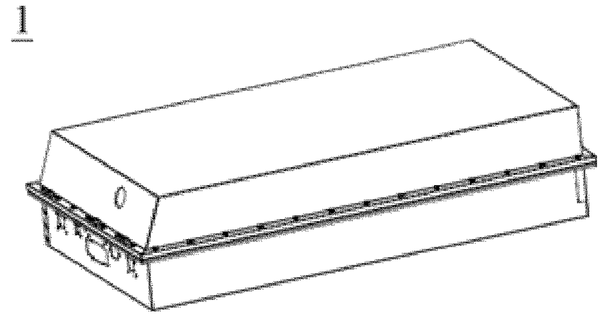


FIG. 4

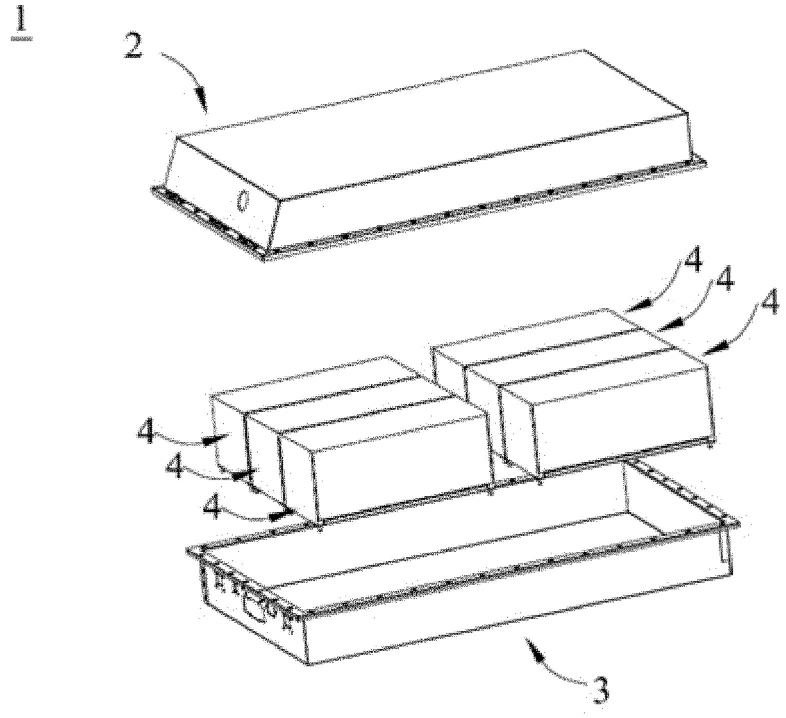


FIG. 5

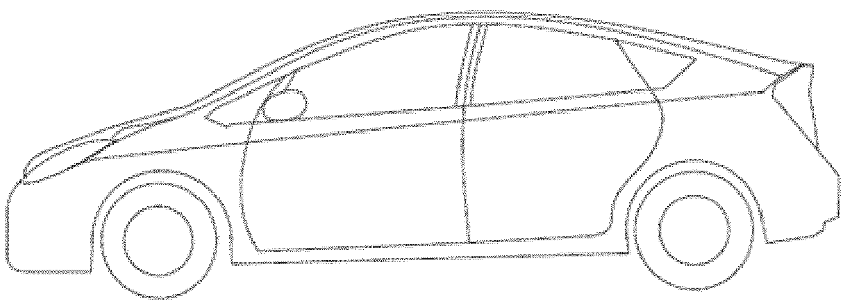

FIG. 6

## INTERNATIONAL SEARCH REPORT

International application No.
**PCT/CN2023/097115**

**A. CLASSIFICATION OF SUBJECT MATTER**

H01M4/36(2006.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNTXT, ENTXTC, WPABSC, VEN, CNKI: 电池, 正极, 活性材料, 锂, 钠, 核, 壳, 包覆, 电解液, 添加剂, battery, positive, electrode, active, electrolyte, additive, core, shell, cover+, lithium, sodium

**C. DOCUMENTS CONSIDERED TO BE RELEVANT**

| Category* | Citation of document, with indication, where appropriate, of the relevant passages | Relevant to claim No. |
|---|---|---|
| A | WO 2023066394 A1 (CONTEMPORARY AMPEREX TECHNOLOGY CO., LTD.) 27 April 2023 (2023-04-27)<br>description, page 19 line 1-page 97 last line, and figures 1-10 | 1-14 |
| A | CN 115810754 A (HUAWEI TECHNOLOGIES CO., LTD.) 17 March 2023 (2023-03-17)<br>entire document | 1-14 |
| A | CN 116137323 A (SHENZHEN DEFANGCHUANGYU NEW ENERGY TECHNOLOGY CO., LTD.) 19 May 2023 (2023-05-19)<br>entire document | 1-14 |
| A | JP 2016035940 A (SONY CORP.) 17 March 2016 (2016-03-17)<br>entire document | 1-14 |
| A | US 2019198870 A1 (OSAKA PREFECTURE UNIVERSITY PUBLIC CORP.) 27 June 2019 (2019-06-27)<br>entire document | 1-14 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **16 June 2023** | **23 June 2023** |
| Name and mailing address of the ISA/CN<br>**China National Intellectual Property Administration (ISA/CN)**<br>**China No. 6, Xitucheng Road, Jimenqiao, Haidian District, Beijing 100088** | Authorized officer<br><br>Telephone No. |

Form PCT/ISA/210 (second sheet) (July 2022)

**INTERNATIONAL SEARCH REPORT**
**Information on patent family members**

International application No.
**PCT/CN2023/097115**

| Patent document cited in search report | Publication date (day/month/year) | Patent family member(s) | Publication date (day/month/year) |
|---|---|---|---|
| WO 2023066394 A1 | 27 April 2023 | None | |
| CN 115810754 A | 17 March 2023 | None | |
| CN 116137323 A | 19 May 2023 | None | |
| JP 2016035940 A | 17 March 2016 | JP 6332258 B2 | 30 May 2018 |
| | | CN 102842734 A | 26 December 2012 |
| | | US 2012328915 A1 | 27 December 2012 |
| | | JP 2013008587 A | 10 January 2013 |
| | | JP 5935246 B2 | 15 June 2016 |
| | | US 9048485 B2 | 02 June 2015 |
| | | CN 102842734 B | 12 April 2017 |
| | | CN 107425177 A | 01 December 2017 |
| | | CN 107425177 B | 11 August 2020 |
| US 2019198870 A1 | 27 June 2019 | WO 2018038037 A1 | 01 March 2018 |
| | | JPWO 2018038037 A1 | 20 June 2019 |
| | | JP 7049665 B2 | 07 April 2022 |
| | | EP 3503270 A1 | 26 June 2019 |
| | | EP 3503270 A4 | 15 April 2020 |
| | | EP 3503270 B1 | 25 January 2023 |
| | | US 10840507 B2 | 17 November 2020 |
| | | CN 109643796 A | 16 April 2019 |
| | | CN 109643796 B | 10 May 2022 |

Form PCT/ISA/210 (patent family annex) (July 2022)